# EUROPEAN PATENT SPECIFICATION

(11) **EP 2 591 952 B1**
(45) Date of publication and mention of the grant of the patent: **03.04.2019**
(21) Application number: 12190831.3
(22) Date of filing: 31.10.2012
(51) Int. Cl.: B60Q 1/14, F21S 41/143, F21S 41/32, F21S 41/663

(54) **Headlamp control apparatus, headlamp control system, headlamp system, and headlamp control method**
Scheinwerfersteuervorrichtung, Scheinwerfersteuersystem, Scheinwerfersystem und Scheinwerfersteuerverfahren
Appareil de commande de phare, système de commande de phare, système de phare et procédé de commande de phare

(30) Priority: 08.11.2011 JP 2011244701
(43) Date of publication of application: 15.05.2013
(73) Proprietor: Koito Manufacturing Co., Ltd., Tokyo 108-8711 (JP)
(72) Inventor: Murakami, Kentarou, Shizuoka-shi, Shizuoka 424-8764 (JP)
(74) Representative: Grünecker Patent- und Rechtsanwälte PartG mbB

(56) References cited:
- EP-A2- 2 085 688
- EP-A2- 2 101 107
- DE-A1-102007 040 042
- DE-A1-102008 062 640
- US-A1- 2008 101 077

## Description

### BACKGROUND OF THE INVENTION

### 1. Field of the Invention

The present invention relates to a headlamp control apparatus, a headlamp control system, a headlamp system, and a headlamp control method.

### 2. Description of Related Art

In recent years, in headlamps, such as headlights and the like, the use of existing halogen lamps that have conventional filaments is being replaced by the use of light emitting diodes (LEDs) that have longer service life and consume less power. The degree of light emission of an LED, that is, the brightness (or luminosity) thereof, is greatly dependent on the electric current that is caused to flow through the LED. Therefore, when an LED is used as a light source, a lighting circuit for adjusting the current that flows through the LED is needed. Usually, such a lighting circuit has an error amplifier, and the current that flows through the LED is feedback controlled so as to be constant.

The applicant of this application has proposed in Japanese Patent Application Publication No. 2011-192865 (JP 2011-192865 A) a technology in which in order to vary the light distribution of a headlamp and achieve fine and minute control of the light distribution, an array of LEDs is employed as a light source and the LEDs are turned on and off individually. By turning on and off the LEDs individually, there can be realized a headlamp equipped with various functions, including a glare restraint function, a pedestrian spotting function, etc.

Usually, the luminance of an LED for realizing a predetermined function of a headlamp is computed by an engine control unit. The engine control unit sends computed luminance data to the lighting circuit, and in turn the lighting circuit controls the LED so that the LED emits light at the computed luminance.

The number of LEDs included in an LED array now tends to increase in order to enhance the flexibility of the light distribution control. If the LEDs to be controlled increase in number, the amount of luminance data sent from the engine control unit to the lighting circuit also increases. If the amount of luminance data increases and therefore the amount of time needed for transmission of luminance data increases, the response of various functions of the headlamp can deteriorate.

With regard to increased amount of luminance data, it is also conceivable to cope with the problem by raising the communication speed of the communication line between the engine control unit and the lighting circuit, However, in reality, the communication protocols regarding the communication line provided in vehicles are often selected from the communication protocols prescribed in the standards, and therefore the width of improvement in communication speed is limited.

The patent application DE 10 2008 062 640 A1 discloses a known headlamp control apparatus and a corresponding method.

### SUMMARY OF THE INVENTION

The present invention, as defined in the apparatus claim 1 and in the method claim 7, has been made in view of the foregoing circumstances, and an object of the present invention is to provide a control technology that makes it possible to improve the transfer speed at which information related to control of a plurality of semiconductor light sources that are employed to realize a headlamp is transferred or communicated when the headlamp is controlled.

A headlamp control apparatus in accordance with a first aspect of the present invention is a headlamp control apparatus as defined in claim 1.

According to this aspect, the state of each semiconductor light source can be controlled on the basis of the mode information
In the headlamp control apparatus of the first aspect, it is preferable that: a resultant irradiated region that is a combination of the irradiated region of a left headlamp and the irradiated region of a right headlamp be divided into a plurality of sectional resultant regions; the mode information include a region ID code for each of the plurality of sectional resultant regions; the headlamp control apparatus further include a correspondence relation retention portion that retains the region ID code and a light source ID code that identifies one of the plurality of semiconductor light sources that illuminates the sectional resultant region identified by the region ID code, with the region ID code and the light source ID associated with each other; and the state determination portion be configured to refer to the correspondence relation retention portion and determine at least one of the semiconductor light sources that is identified by the light source ID code corresponding to the region ID code included in the mode information, as the semiconductor light source, in which luminance needs to be altered.

In the headlamp control apparatus of the first aspect, it is preferable that the mode information include information that, when it is determined that another vehicle than the host vehicle that includes the headlamp control apparatus exists in the irradiated region, specifies a portion of the irradiated region where the another vehicle exists, and the state determination portion be configured to make a determination of the state of the semiconductor light sources so that the state of at least one of the semiconductor light sources that illuminates the portion of the irradiated region where the another vehicle exists is caused to be a state of emitting light at a luminance that is lower than a luminance of another semiconductor light source than the at least one of the semiconductor light sources that illuminates the portion of the irradiated region where the another vehicle exists.

In the headlamp control apparatus of the first aspect, it is preferable that the mode information include information that, when it is determined that a person exists in the irradiated region, specifies a portion of the irradiated region where the person exists, and the state determination portion be configured to make a determination of the state of the semiconductor light sources so that at least one of the semiconductor light sources illuminates the portion of the irradiated region where the person exists is caused to be a state of emitting light at a luminance that is higher than a luminance of another semiconductor light source than the at least one semiconductor light sources that illuminates the portion of the irradiated region where the person exists.

A headlamp control system in accordance with a second aspect of the present invention is defined in claim 5.

A headlamp system in accordance with a third aspect of the present invention includes: the headlamp control apparatus according to the first aspect; and the headlamp of the vehicle that includes the plurality of semiconductor light sources and that is capable of altering brightness partly in the irradiated region according to the operation mode.

A headlamp system in accordance with a fourth aspect of the present invention includes: the headlamp control system according to the second aspect; and the headlamp of the vehicle that includes the plurality of semiconductor light sources and that is capable of altering brightness partly in the irradiated region according to the operation mode.

A headlamp control method in accordance with a fifth aspect of the present invention is defined in claim 7 and includes: identifying a portion of an irradiated region, in which brightness of irradiation needs to be altered, the irradiated region being a region irradiated by a left headlamp and a right headlamp, each of which includes a plurality of semiconductor light sources; identifying at least one of the semiconductor light sources that is involved in irradiation of the identified portion, with regard to each of the left headlamp and the right headlamp; and altering luminance of the identified at least one of the semiconductor light sources of each of the left headlamp and the right headlamp.

The headlamp control method of the fifth aspect further include determining whether another vehicle than a host vehicle that includes the left headlamp and the right headlamp exists in the irradiated region, wherein the identifying the portion, in which brightness of irradiation needs to be altered, includes identifying a portion of the irradiated region where the another vehicle exists if it is determined that the another vehicle exists in the irradiated region, and when the luminance is altered, the luminance of the at least one of the semiconductor light sources that irradiates the portion of the irradiated region where the another vehicle exists is altered to a luminance that is lower than a luminance of another semiconductor light source than the at least one of the semiconductor light sources that irradiates the portion of the irradiated region where the another vehicle exists.

It is preferable that the headlamp control method of the fifth aspect further include determining whether a person exists in the irradiated region, wherein the identifying the portion, in which brightness of irradiation needs to be altered, includes identifying a portion of the irradiated region where the person exists if it is determined that the person exists in the irradiated region, and when the luminance is altered, the luminance of the at least one of the semiconductor light sources that irradiates the portion of the irradiated region where the person exists is altered to a luminance that is higher than a luminance of another semiconductor light source than the at least one of the semiconductor light sources that irradiates the portion of the irradiated region where the person exists.

According to the present invention, it is possible to improve the speed of transfer of information related to the control of a plurality of semiconductor light sources of a headlamp when the headlamp is controlled.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a horizontal sectional view of a vehicular headlamp that is controlled by a control apparatus in accordance with an embodiment of the present invention;
FIG. 2 is a vertical sectional view of a light source unit shown in FIG. 1;
FIG. 3 is a front view of the light source unit shown in FIG. 1;
FIG. 4 is a schematic diagram of a resultant irradiated region that combine the irradiated regions of left and right high-beam lamp units;
FIG. 5 is a block diagram showing functions and a configuration of the control apparatus in accordance with the embodiment;
FIG. 6 is a schematic diagram showing a structure of mode information;
FIG. 7 is a flowchart showing a series of processes performed by a left-side state determination portion shown in FIG. 5;
FIG. 8 is a data structure diagram showing an example of data retained in a left-side correspondence relation retention portion shown in FIG. 5;
FIG. 9 is a data structure diagram showing an example of data retained in a right-side correspondence relation retention portion; and
FIG. 10 is a flow chart showing a series of processes performed by a control apparatus and an engine control unit shown in FIG. 5.

### DETAILED DESCRIPTION OF EMBODIMENTS

The same or comparable component elements, members and signals in the attached drawings are denoted by the same characters, and redundant descriptions are appropriately omitted below. Furthermore, in the drawings, part of members or the like that are not important for the following description are omitted from the illustrations. Still further, the characters assigned to voltage, current, resistance, etc., will be sometimes used as representing the values of voltage, current or resistance according to need.

In the specification, the "state in which a member A is connected to a member B" includes not only the case where the member A and the member B are physically and directly connected to each other" but also the case where the member A and the member B are indirectly connected to each other via an electroconductive member.

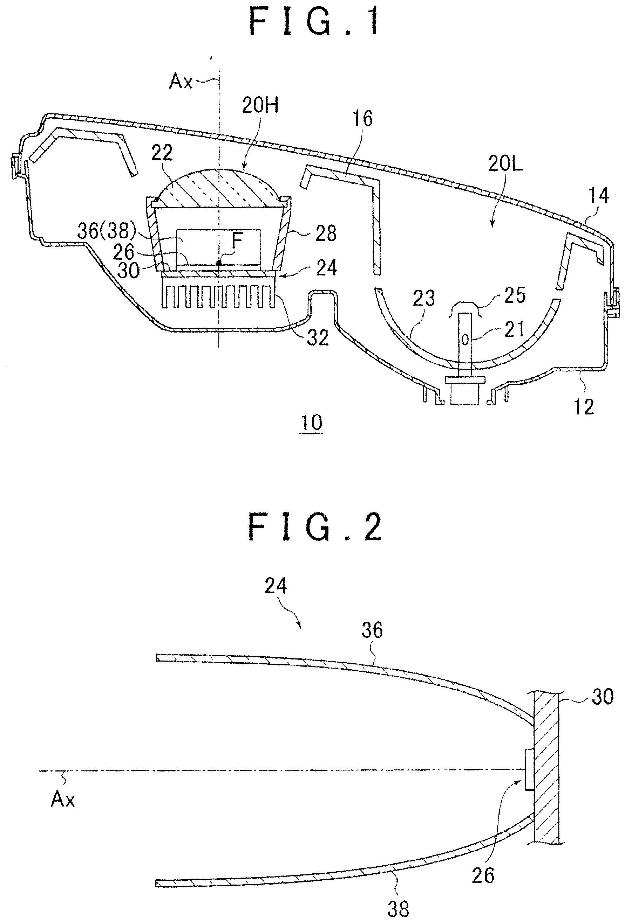

FIG. 1 is a horizontal sectional view of a vehicular headlamp 10 that is controlled by a control apparatus in accordance with an embodiment of the present invention. The vehicular headlamp 10 is realized by using a plurality of semiconductor light sources, that is, light emitting diodes (LEDs), so that brightness can be altered partly in an irradiated region according to one of the operation modes that individually correspond to the various functions, such as the glare restraint function, the pedestrian spotting function, an electronic swivel function, etc.

The glare restraint function is a function of restraining glare to a preceding vehicle or an oncoming vehicle by restraining the brightness in part of the irradiated region of the vehicular headlamp 10, the part corresponding to the preceding vehicle or the oncoming vehicle. The pedestrian spotting function is a function of illuminating a pedestrian by increasing the brightness in part of the irradiated region of the vehicular headlamp 10, the part corresponding to the pedestrian. The electronic swivel function is a function of performing a control of deflecting the radiating direction of the vehicular headlamp 10 to the left and right directions by using electronic means, not using mechanical means, such as an electric motor, an actuator, etc. Each of the glare restraint function, the pedestrian spotting function and the electronic swivel function is used when the vehicular headlamp 10 is in a state of radiating the high beam (hereinafter, termed the high-beam state).

A lamp chamber of the vehicular headlamp 10 is made up of a lamp body 12, and a translucent cover 14 attached to a front-end opening portion of the lamp body 12. A low-beam lamp unit 20L and a high-beam lamp unit 20H are housed in the lamp chamber. The low-beam lamp unit 20L and the high-beam lamp unit 20H are each attached to the lamp body 12 via a support member (not shown). An extension member 16 has an opening portion in regions where the lamp units exist, and is fixed to the lamp body 12 or the translucent cover 14.

The low-beam lamp unit 20L is a well-known reflection-type lamp, and has a light source bulb 21 and a reflector 23. In the low-beam lamp unit 20L, the reflector 23 reflects light emitted from the light source bulb 21. Part of the light traveling forward from the reflector 23 is cut by a light shield plate (not shown), so that a light distribution pattern for the low beam that has a predetermined cut-off line is formed. A distal end of the light source bulb 21 is provided with a shade 25 that cuts light emitted forward from the light source bulb 21. Incidentally, the configuration of the low-beam lamp unit 20L is not limited to what is described above, but may also be a projector type lamp unit.

The high-beam lamp unit 20H is a projector type lamp unit, and has a projection lens 22, a light source unit 24 that includes an LED array 26 in which a plurality of LEDs are arrayed in a certain arrangement, and a holder 28 that holds the projection lens 22 and the light source unit 24. The projection lens 22 is a plane-convex aspherical lens whose front-side surface is a convex surface and whose rear-side surface is a flat surface. The projection lens 22 is disposed on an optical axis Ax that extends in the vehicular longitudinal direction. The projection lens 22 is configured so as to project an image formed on a rear-side focal plane that includes the rear-side focal point F of the projection lens 22 onto a vertical imaginary screen disposed forward of the lamp, as an inverted image. A peripheral edge portion of the projection lens 22 is held by a front end annular groove portion of the holder 28.

The light source unit 24 is fixed to a rear end side of the holder 28, with the LED array 26 disposed to the rear side of the rear-side focal point F of the projection lens 22. The holder 28 is attached to the lamp body 12 via a support member (not shown).

The light source unit 24 includes a mount plate 30 for mounting the LED array 26, an upper reflector 36 and a lower reflector 38 that are fixed to the mount plate 30, and a heat radiating plate 32 for releasing heat produced by the LED array 26. The LED array 26 is fixed to a front-side surface of the mount plate 30 so that a light emission surface of the LED array 26 faces forward in the direction of the optical axis Ax. A center of the LED array 26 is positioned on the optical axis Ax. The heat radiating plate 32 is fixed to a rear-side surface of the mount plate 30.

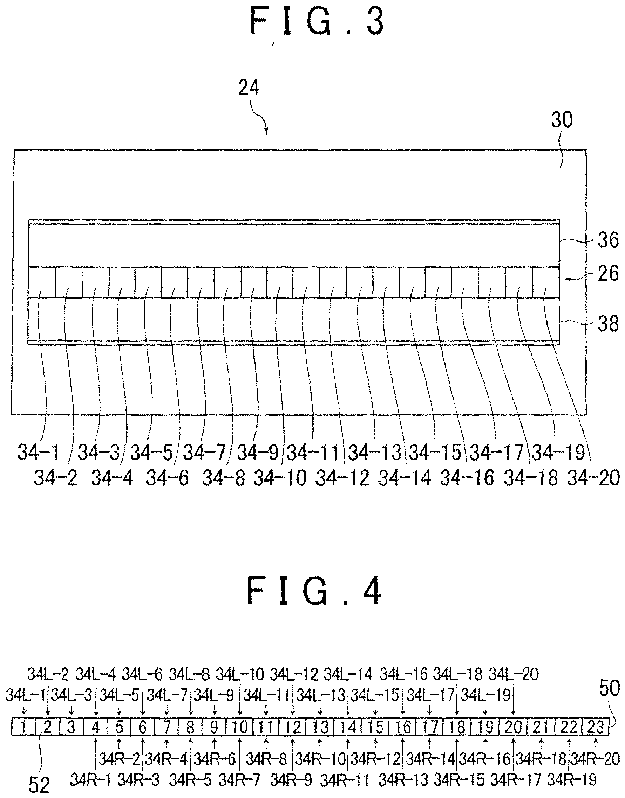

FIG 2 is a vertical sectional view of the light source unit 24. FIG 3 is a front view of the light source unit 24. In FIG. 2, illustration of the heat radiating plate 32 is omitted. The upper reflector 36 is provided above the LED array 26, and the lower reflector 38 is provided below the LED array 26. The LED array 26 is an array in which twenty square-shaped LEDs 34-1 to 34-20 are arranged in one lateral row. The LEDs are fixed to the mount plate 30. Each LED is individually turned on and off by a control apparatus in accordance with the embodiment.

Usually, a vehicle has one vehicular headlamp 10 on each of the left side and the right side of a front portion of the vehicle. In the following description, the twenty LEDs included in the left vehicular headlamp 10 are termed the twenty left LEDs 34L-1 to 34L-20, and the twenty LEDs included in the right vehicular headlamp 10 are termed the twenty right LEDs 34R-1 to 34R-20.

FIG. 4 is a schematic diagram of the resultant irradiated region 50 combining the irradiated regions of the high-beam lamp units 20H of the left and right vehicular headlamps 10. The resultant irradiated region 50 is divided into a plurality of sectional resultant regions 52, for example, twenty three sectional resultant regions 52. In the control apparatus 100, each of the sectional resultant regions 52 is assigned with a region ID code that identifies the sectional resultant region 52. For example, as in FIG. 4, a region ID code "1", a region ID code "2"... a region ID code "23" may be set in that order from the leftmost sectional resultant region 52.

The sectional resultant regions 52 of the region ID code "1" to the region ID code "20" are irradiated by the left LEDs 34L-1 to 34L-20, respectively, and the sectional resultant regions 52 of the region ID code "4" to the region ID code "23" are irradiated by the right LEDs 34R-1 to 34R-20, respectively. That is, the sectional resultant regions 52 of the region ID codes "1" to "20" constitute the irradiated region of the left vehicular headlamp 10, and the sectional resultant regions 52 of the region ID codes "4" to "23" constitute the irradiated region of the right vehicular headlamp 10. The irradiated region of the left vehicular headlamp 10 overlaps at least partially with the irradiated region of the right-side vehicular headlamp 10, and, in this example shown in FIG. 4, the overlap occurs in the sectional resultant regions 52 of the region ID codes "4" to "20".

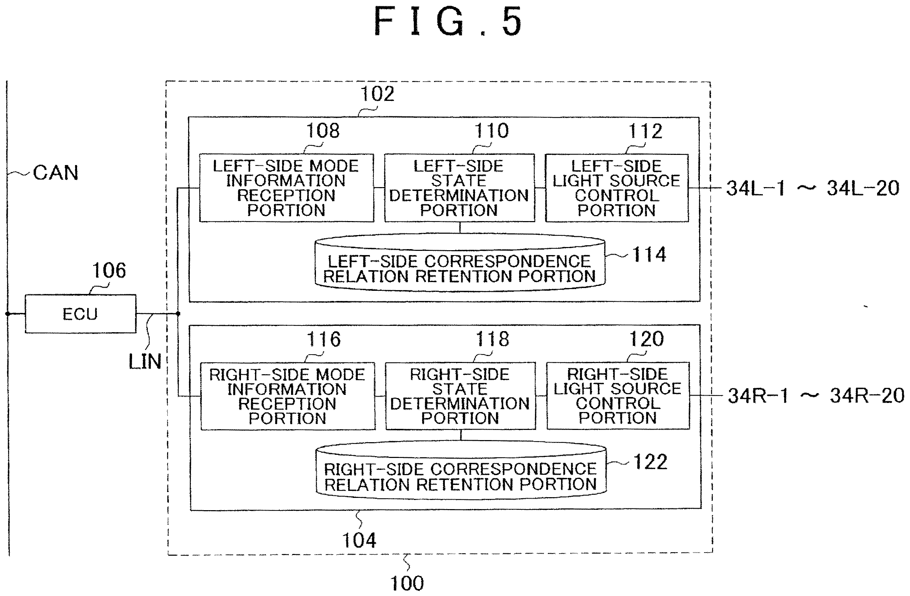

FIG. 5 is a block diagram showing functions and a configuration of the control apparatus 100 in accordance with the embodiment. Each of the blocks shown in FIG. 5 can be implemented in the form of hardware by electronic elements, typically, a central processing unit (CPU) of a computer and/or mechanical devices, and can be implemented in the form of software by a computer program or the like. In the diagram of FIG. 5, however, functional blocks that can be implemented by combination of such hardware and software. Therefore, it should be understood by a person with ordinary skill in the art who reads this specification that these functional blocks can be implemented in various forms depending on combination of hardware and software.

The control apparatus 100 controls the left and right vehicular headlamps 10. The control apparatus 100 includes a left-side control apparatus 102 that controls the twenty left LEDs 34L-1 to 34L-20 and a right-side control apparatus 104 that controls the twenty right LEDs 34R-1 to 34R-20. The left-side control apparatus 102 and the right-side control apparatus 104 are both connected, via a first communication line LIN, to an engine control unit (ECU) 106 that is a controller for performing overall electric controls of the motor vehicle. The engine control unit 106 functions as an electronic control unit in the present invention. Through the first communication line LIN, communication is performed according to the LIN (local interconnect network), which is a kind of a communication protocol of the in-vehicle local area network (LAN). The engine control unit 106 is connected to an external device via a second communication line CAN. Through the second communication line CAN, communication is performed according to the CAN (controller area network), which is a kind of a communication protocol of the in-vehicle LAN. In this embodiment, the communication speed of the first communication line LIN is lower than the communication speed of the second communication line CAN

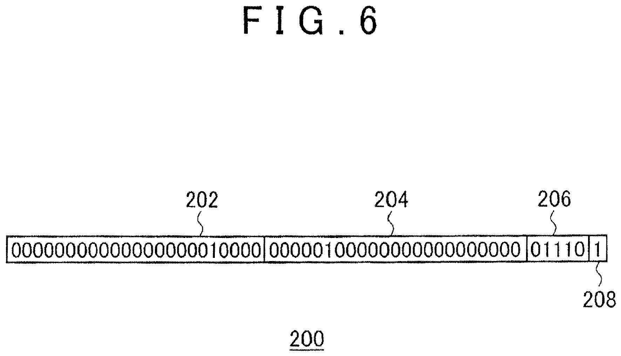

The engine control unit 106 generates mode information 200 that indicates the on/off-state of each of operation modes that correspond to the functions of the vehicular headlamp 10 and that specifies the sectional resultant regions 52, in which brightness needs to be altered, if the operation mode is on, and sends the mode information 200 out into the first communication line LIN. FIG. 6 is a schematic diagram showing a structure of the mode information 200. The mode information 200 includes glare restraint information 202 represented by 23 bits, spot information 204 represented by 23 bits, swivel information 206 represented by 5 bits, and high-beam on/off information 208 represented by 1 bit. The mode information 200 is information of 52 bits in total.

The glare restraint information 202 specifies the on/off state of a glare restraint mode that corresponds to the glare restraint function. The bits of the glare restraint information 202 correspond to the region ID codes. For example, the first to twenty third bits correspond to the region ID codes "1" to "23", respectively. The engine control unit 106 determines whether there exists a vehicle other than the host vehicle provided with the engine control unit 106, such as a preceding vehicle, an oncoming vehicle, etc., in the resultant irradiated region 50, on the basis of information received from a on-board camera (not shown) via the second communication line CAN. If it is determined that a vehicle other than the host vehicle exists in the resultant irradiated region 50, the engine control unit 106 generates glare restraint information 202 that specifies the sectional resultant regions 52 where that vehicle exists. More specifically, in the glare restraint information 202, the bits that correspond to vehicle-existing region ID codes that are the region ID codes of the sectional resultant regions 52 where the vehicle other than the host vehicle exists are set to a value of "1", and the other bits are set to a value of "0". In the control apparatus 100, if at least one of the bits of the glare restraint information 202 has a value of "1", the glare restraint mode is turned on, and the brightness of the sectional resultant regions 52 identified by the region ID code that corresponds to that bit is reduced. If all the bits of the glare restraint information 202 have a value of "0", the glare restraint mode is turned off.

The spot information 204 specifies the on/off state of the spot mode that corresponds to the pedestrian spotting function. The bits of the spot information 204 correspond to the region ID codes. For example, the first to twenty third bits of the spot information 204 correspond to the region ID codes "1" to "23", respectively. The engine control unit 106 determines whether there exists a person, such as a pedestrian or the like, in the resultant irradiated region 50, on the basis of the information received from the on-board camera (not shown) via the second communication line CAN. If it is determined that there exists a person, the engine control unit 106 generates the spot information 204 that specifies the sectional resultant regions 52 where that person exists. More specifically, in the spot information 204, the bits that correspond to person-existing region ID codes that are region ID codes of the sectional resultant regions 52 where a person exists have a value of "1", and the other bits have a value of "0". If at least one of the bits of the spot information 204 has a value of "1", the control apparatus 100 turns on the spot mode, and increases the brightness of the sectional resultant regions 52 identified by the region ID codes that correspond to the at least one bit of "1". If all the bits of the spot information 204 have a value of "0", the spot mode is turned off.

Besides, with regard to the glare restraint function or the pedestrian spotting function, it is possible that there are a plurality of sectional resultant regions 52 in the resultant irradiated region 50 for which the function is turned on. Therefore, for either one of the glare restraint information 202 and the spot information 204, the region ID codes of the sectional resultant regions 52, in which brightness should be altered are specified by assigning one bit that indicates the on/off state to each region ID code.

The swivel information 206 specifies the on/off state of the swivel mode that corresponds to the electronic swivel function. The engine control unit 106 selects a sectional resultant region 52 that is to serve as a reference of brightness in the resultant irradiated region 50, that is, a center of the region 50, and generates the swivel information 206 that specifies the selected sectional resultant region 52. More specifically, in the swivel information 206, the region ID code of the selected sectional resultant region 52 is represented by a binary number. The control apparatus 100 turns on the swivel mode if the swivel information 206 represents a region ID code of an existing region, and turns off the swivel mode if the swivel information 206 represents a region ID code of a region that does not exist, such as "0", "24", etc. The high-beam on/off information 208 is set to "1" in the case where the left and right vehicular headlamps 10 need to be set to the high-beam state, and is set to "0" in the other cases.

Referring back to FIG. 5, the left-side control apparatus 102 includes a left-side mode information reception portion. 108, a left-side state determination portion 110, a left-side light source control portion 112 and a left-side correspondence relation retention portion 114. The left-side mode information reception portion 108 receives the mode information 200 via the first communication line LIN.

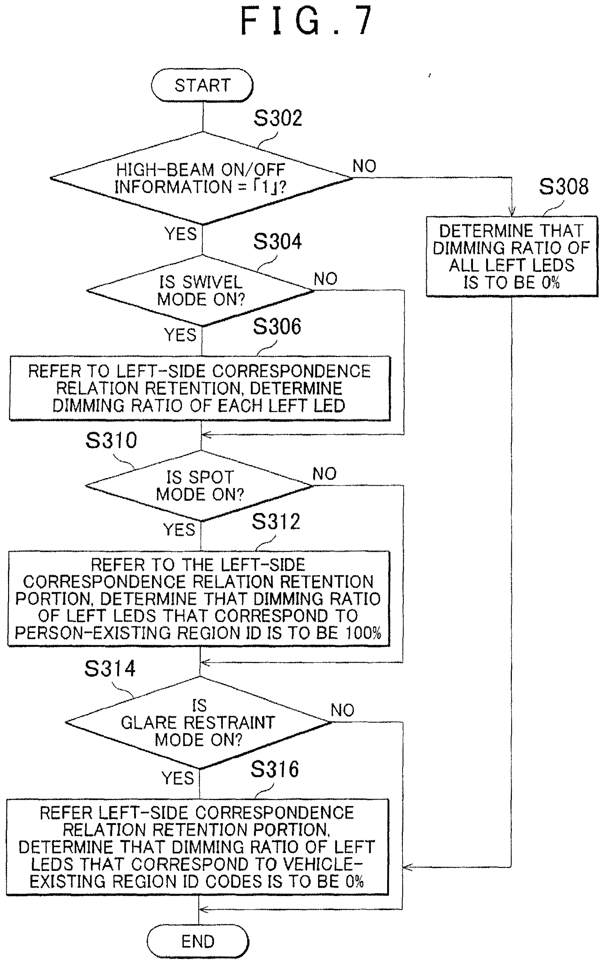

If the mode information 200 received by the left-side mode information reception portion 108 indicates the on-state of the operation mode, the left-side state determination portion 110 determines the state of each of the left LEDs on the basis of the sectional resultant regions 52 specified by the mode information 200. If the mode information 200 indicates the on-state of the operation mode, there is a possibility that there exists at least one left LED whose state following the reception of the mode information 200 is the same as the state prior to the reception. As for the left LED or LEDs whose state remains the same, the left-side state determination portion 110 determines not to change the state, so that the states of such LEDs are determined. The left-side state determination portion 110 will be described below with reference to FIG. 7.

The left-side light source control portion 112 controls each left LED so that the left LED is brought into the state that is determined by the left-side state determination portion 110. The left-side light source control portion 112 has twenty switching regulators (not shown). Each of the twenty switching regulators is supplied with electric power from an on-board battery (not shown) to generate a drive current that is to be supplied to a corresponding one of the twenty left LEDs 34L-1 to 34L-20. When generating the drive current, each switching regulator adjusts the duty ratio of a switching element so as to bring the left LED that is to be driven into the state that is determined by the left-side state determination portion 110. In particular, each switching regulator sets the duty ratio according to the determined dimming ratio of the left LED to be driven.

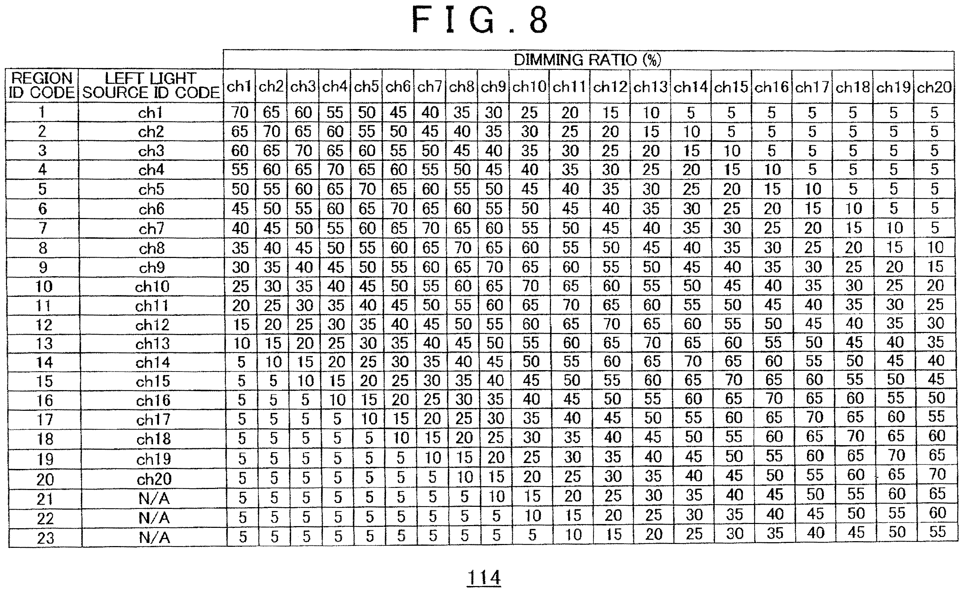

FIG. 7 is a flowchart showing a series of processes performed by the left-side state determination portion 110. The left-side state determination portion 110 refers to the high-beam on/off information 208 that is contained in the mode information 200. If the high-beam on/off information 208 is "0" (No in S302), the left-side state determination portion 110 determines that all the left LEDs are to be in a light-off state, that is, determines that the dimming ratio of all the left LEDs is to be 0% (S308). According to increase/decrease in the dimming ratio of each LED, the luminance of the LED also increases or decreases. Therefore, determining the dimming ratio of an LED corresponds to determining the luminance of the LED. If the high-beam on/off information 208 is "1" (Yes in S302), the left-side state determination portion 110 refers to the swivel information 206 contained in the mode information 200, and determines the on/off state of the swivel mode (determines whether the swivel mode is on or off) (S304). If it is determined that the swivel mode is on (Yes in S304), the left-side state determination portion 110 refers to the left-side correspondence relation retention portion 114 (described later with reference to FIG. 8) and determines the dimming ratio of each of the left LEDs that correspond to the region ID codes that the swivel information 206 represents (S306).

After step S306, or if it is determined that the swivel mode is off (No in S304), the left-side state determination portion 110 refers to the spot information 204 contained in the mode information 200, and determines the on/off state of the spot mode (S310). If it is determined that the spot mode is on (Yes in S310), the left-side state determination portion 110 refers to the left-side correspondence relation retention portion 114, and determines left light source ID codes that correspond to the person-existing region ID codes that the spot information 204 specifies. The left light source ID codes are ID codes that identify left LEDs. The left-side state determination portion 110 determines the left LEDs identified by the determined left light source ID codes, as left LEDs whose dimming ratio needs to be altered. The left-side state determination portion 110 determines that the thus-determined left LEDs are to be in a state of emitting light at higher luminance than the other left LEDs. More specifically, the left-side state determination portion 110 determines that the dimming ratio of the determined left LEDs is to be 100% (S312).

After step S312, or if it is determined that the spot mode is off (No in S310), the left-side state determination portion 110 refers to the glare restraint information 202 contained in the mode information 200, and determines the on/off state of the glare restraint mode (S314). If it is determined that the glare restraint mode is on (Yes in S314), the left-side state determination portion 110 refers to the left-side correspondence relation retention portion 114, and determines left light source ID codes that correspond to the vehicle-existing region ID codes that the glare restraint information 202 specifies. The left-side state determination portion 110 determines the left LEDs identified by the determined left light source ID codes, as left LEDs whose dimming ratio needs to be altered. The left-side state determination portion 110 determines that the determined left LEDs are to be in a state of emitting light at lower luminance than the other left LEDs. More specifically, the left-side state determination portion 110 determines that the dimming ratio of the determined left LEDs is to be 0% (S316).

FIG. 8 is a data structure diagram showing an example of data retained in the left-side correspondence relation retention portion 114. The left-side correspondence relation retention portion 114 retains region ID codes, left light source ID codes, and dimming ratios of the left LEDs, with each region ID code associated with the left light source ID code that identifies the left LED that illuminates the sectional resultant region 52 identified by the region ID code, and associated with the dimming ratios of the left LEDs, which ratios are used in the case of the region ID code that is specified by the swivel information 206.

The right-side control apparatus 104 includes a right-side mode information reception portion 116, a right-side state determination portion 118, a right-side light source control portion 120 and a right-side correspondence relation retention portion 122. The right-side mode information reception portion 116 corresponds to the left-side mode information reception portion 108. The right-side state determination portion 118 corresponds to the left-side state determination portion 110. The right-side light source control portion 120 corresponds to the left-side light source control portion 112. The right-side correspondence relation retention portion 122 corresponds to the left-side correspondence relation retention portion 114. A main difference between the left-side control apparatus 102 and the right-side control apparatus 104 is the structure of the correspondence relation retention portion of each apparatus,

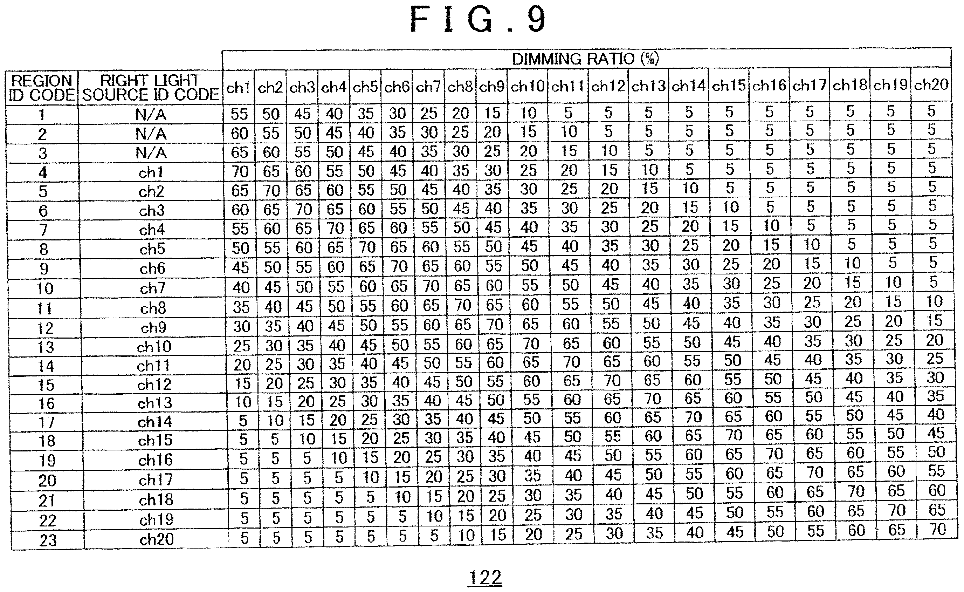

FIG 9 is a data structure diagram showing an example of data retained in the right-side correspondence relation retention portion 122. The right-side correspondence relation retention portion 122 retains region ID codes, right light source ID codes, and dimming ratios of the right LEDs, with each region ID code associated with the right light source ID code that identifies the right LED that illuminates the sectional resultant region 52 identified by the region ID code, and associated with the dimming ratios of the right LEDs, which ratios are used in the case of the region ID code that is specified by the swivel information 206.

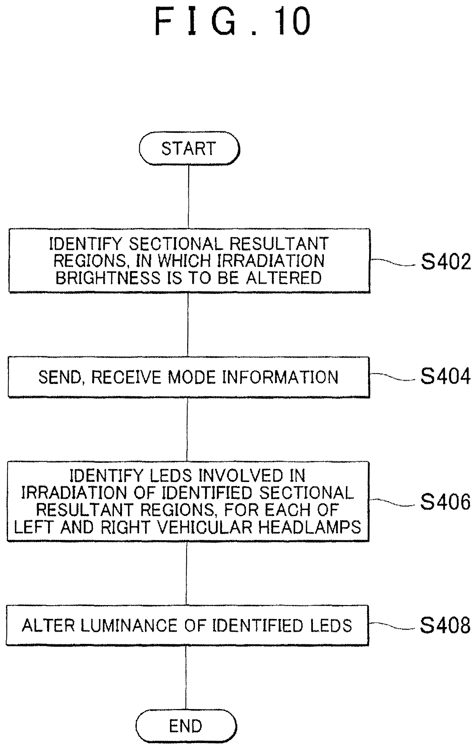

An operation of the control apparatus 100 configured as described above will be described. FIG. 10 is a flowchart showing a series of processes performed by the control apparatus 100 and the engine control unit 106. The vehicle-side control apparatus, that is, the engine control unit 106, identifies the sectional resultant regions 52, in which irradiation brightness needs to be altered, on the basis of the information received through the second communication line CAN (S402). The vehicle-side control apparatus generates the mode information 200 that contains information regarding the identified sectional resultant regions 52, and sends out the information into the first communication line LIN. The control apparatus 100 on the headlamp side receives the mode information 200 via the first communication line LIN (S404). The headlamp-side control apparatus 100 identifies the LEDs involved in the irradiation of the identified sectional resultant regions 52, with regard to each of the left and right vehicular headlamps 10 (S406). At this time, the headlamp-side control apparatus 100 refers to the left-side correspondence relation retention portion 114 and the right-side correspondence relation retention portion 122. The headlamp-side control apparatus 100 alters the luminance of the identified LEDs (S408).

According to the control apparatus 100 in accordance with the embodiment, the mode information 200 that the left-side control apparatus 102 and the right-side control apparatus 104 receive through the first communication line LIN does not contain information on the dimming ratios of the LEDs but, instead, indicates the on/off state of the operation mode and specifies the sectional resultant regions 52, in which brightness needs to be altered if the operation mode is on. Therefore, the amount of data communicated in one operation via the first communication line LIN can be reduced in comparison with the case where the information received through the first communication line LIN contains the exact dimming ratios of the LEDs of the vehicular headlamp 10. As a result, faster transfer of information via the first communication line LIN can be achieved, and the response of various functions of the vehicular headlamp 10 can be improved.

The case where the engine control unit computes the dimming ratio of each of the left and right LEDs on the basis of the on/off state of the operation mode, and sends out the computed dimming ratios will be considered as a comparative example. The dimming ratio is set to the light-off state (0%) or the light-on state (100%) or is specified between 5% and 95% inclusive in steps of 5%. Since the total number of the states of the dimming ratio is twenty one, five bits are needed in order to specify the dimming ratio. Therefore, the amount of data of the information sent out by the left-side control apparatus and the right-side control apparatus via the first communication line LIN is (5 bits for each LED) × (40 of left and right LEDs in total) = 200 bits. According to the LIN 1.3 standard, the amount of data for one schedule ID code of the LIN communication is eight bytes at maximum. Therefore, in this case, four schedule ID codes are needed. Therefore, the communication time for one operation is relatively long.

On the other hand, in the control apparatus 100 in accordance with the embodiment, the mode information 200 is 52-bit information as mentioned above. Therefore, the amount of data communication by one operation can be reduced to such an amount that the mode information 200 can be transferred by using one schedule ID code, and therefore the communication time for one operation can be reduced.

Furthermore, generally the engine control unit also controls the ignition system, the fuel system, etc., besides the vehicular headlamps. Therefore, if the amount of computation related to the control of the LEDs of the vehicular headlamps increases, there is a possibility that the computation related to the control of the LEDs receives a low priority and is postponed, resulting in a long computation time, depending on the setting of the priorities of the processes in the engine control unit. Therefore, by notifying the on/off state of the operation mode as in the embodiment instead of computing the dimming ratios, the amount of the computation performed by the engine control unit 106 in relation to the control of the LEDs can be reduced. As a result, the time of the computation performed by the engine control unit 106 in relation to the control of the LEDs can be reduced, and the overall processing speed of the engine control unit 106 can be increased.

In the control apparatus 100 in accordance with the embodiment, any of the glare restraint information 202, the spot information 204 and the swivel information 206 specifies the sectional resultant regions 52, and the left-side control apparatus 102 and the right-side control apparatus 104 determine the left and right LEDs, respectively, that correspond to the specified sectional resultant regions 52. Therefore, the amount of data communicated via the first communication line LIN in one operation can be reduced in comparison with the case where the glare restraint information, the spot information and the swivel information directly specify the left and right LEDs.

For example, in the case where the glare restraint information directly specifies the left and right LEDs, the glare restraint information is information of 40 bits as a result of combining 20 bits for specifying the left LEDs and 20 bits for specifying the right LEDs. On the other hand, in the embodiment, the glare restraint information 202 is information of 23 bits, which corresponds to the number of the sectional resultant regions 52. Thus, according to the embodiment, the amount of data communication can be reduced.

Furthermore, of the functions of the vehicular headlamp 10, the functions that partly alter the brightness, such as the glare restraint function and the pedestrian spotting function, are configured to send and receive information that specifies the portions, in which brightness needs to be altered, via the first communication line LIN. Therefore, the amount of data communication can be more effectively reduced.

The glare restraint function, the pedestrian spotting function and the electronic swivel function are functions that adapt the state of radiation of the vehicular headlamp 10 to the situation of travel of the vehicle that changes from moment to moment and therefore, in general, delays in processing are not preferable. According to the control apparatus 100 in accordance with the embodiment, delays in processing performed by the engine control unit 106 are reduced, and faster transfer of information via the first communication line LIN becomes possible. Therefore, the control apparatus 100 is more suitable to the vehicular headlamp 10 that is equipped with the foregoing functions.

The configuration and operations of the control apparatus 100 in accordance with the embodiment have been described above. It is to be understood by a person with ordinary skill in the art that this embodiment is illustrative, and that various modifications can be made in the combinations of the various component elements and the various processes, and that such modifications are within the scope of the present invention.

Although the embodiment has been described in conjunction with the configuration, in which the left-side control apparatus 102 includes the left-side correspondence relation retention portion 114 and the right-side control apparatus 104 includes the right-side correspondence relation retention portion 122, the present invention is not limited to this. For example, the control apparatus may have a retention portion that has both the function of the left-side correspondence relation retention portion 114 and the function of the right-side correspondence relation retention portion 122, and the left and right state determination portions may refer to such a retention portion.

Although in conjunction with the embodiment, the glare restraint function, the pedestrian spotting function and the electronic swivel function have been described as functions of the vehicular headlamp 10, the functions of the vehicular headlamp 10 are not limited to those functions. For example, the vehicular headlamp may also have a vehicle speed-dependent dimming function of reducing the light according to the vehicle speed, and a rainy weather light distribution function of delivering a light distribution commensurate with the rainy weather when it rains.

The vehicle speed-dependent dimming function may be a function of uniformly dimming all the LEDs on the basis of a predetermined vehicle speed. The mode information may contain vehicle speed-dependent dimming information that specifies the on/off state of the vehicle speed-dependent dimming mode that corresponds to the vehicle speed-dependent dimming function. The vehicle speed-dependent dimming information may be information indicating dim states at vehicle speed in steps of 5 km/h in the range of 20 km/h and below, and may be 2 bits in data amount. The left and right control apparatuses may have predetermined dimming ratio data that corresponds to the 2-bit vehicle speed-dependent dimming information.

The rainy weather light distribution function may be a function of adjusting the brightness of the LEDs at the time of rain by using a constant that correspond to all the LEDs. The mode information may contain rainy weather light distribution information that specifies the on/off state of a rainy weather light distribution mode that corresponds to the rainy weather light distribution function. The rainy weather light distribution information may be one-bit information that assumes "1" at the time of rain and "0" at the other times. The left and right control apparatuses may have predetermined dimming ratio data for rainy weather. The amount of data of the mode information in the case where these functions are added is 55 bits obtained by adding 2 bits and 1 bit for the two added functions to 52 bits for the above-described functions. Therefore, even if these two functions are added, the entire data can be transferred by using merely one schedule ID code.

## Claims

1. A headlamp control apparatus (100) for controlling a headlamp (10) of a host vehicle that includes a plurality of semiconductor light sources (34R/L-1 to 34R/L-20), and the headlamp control apparatus (100) being capable of altering brightness partly in an irradiated region according to on-off state of plurality of operation modes, wherein an operation mode individually corresponds to one of the various functions of the headlamp, such as for example the glare restraint function or the pedestrian spotting function,
the headlamp
control apparatus comprising:
a mode information reception portion (108, 116) configured to receive, via a predetermine communication line, the mode information (200)
wherein the mode information (200) indicates an on/off state of each of the operation modes and specifies, at least for one of said operation mode, sectional resultant regions (52), in which brightness needs to be altered if said at least one operation mode is on, wherein the sectional resultant regions (52) are the divided regions of a resultant irradiated region (50) that is a combination of the irradiated region of the left and right headlamps, the mode information (200) includes a region ID code for each of the plurality of sectional resultant regions (1 to 23) ;
a correspondence relation retention portion (114, 122) that retains the region ID code and a light source ID code that identifies one of the plurality of semiconductor light sources that illuminates the sectional resultant region identified by the region ID code, with the region ID code and the light source ID associated with each other;
a state determination portion (110, 118) configured to refer to the correspondence relation retention portion (114, 112) to determine a state of each of the plurality of semiconductor light sources (34R/L-1 to 34R/L-20) based on which sectional resultant regions (52) is specified by the mode information (200) received by the mode information reception portion (108, 116), if the mode information (200) received indicates that one of the at least one operation mode is on,
wherein the state determination portion (110,118) is further configured to refer to the correspondence relation retention portion (114, 122) to determine at least one of the semiconductor light sources that is identified by the light source ID code corresponding to the region ID code included in the mode information (200), as the semiconductor light source whose luminance needs to be altered; and
a light source control portion (112, 120) configured to control the plurality of semiconductor light sources (34R/L-1 to 34R/L-20) so as to cause each of the plurality of semiconductor light sources (34R/L-1 to 34R/L-20) to be brought into the state determined by the state determination portion (110, 118),

2. The headlamp control apparatus (100) according to claim 1, wherein:
the mode information (200) includes information (202) that, when it is determined that another vehicle than the host vehicle that includes the headlamp control apparatus exists in the irradiated region, specifies a portion of the irradiated region where the another vehicle exists; and
the state determination portion (110, 118) is configured to make a determination of the state of the semiconductor light sources so that the state of at least one of the semiconductor light sources that illuminates the portion of the irradiated region where the another vehicle exists is caused to be a state of emitting light at a luminance that is lower than a luminance of another semiconductor light source than the at least one of the semiconductor light sources that illuminates the portion of the irradiated region where the another vehicle exists.

3. The headlamp control apparatus (100) according to claim 1 or 3, wherein:
the mode information (200) includes information (204) that, when it is determined that a person exists in the irradiated region, specifies a portion of the irradiated region where the person exists; and
the state determination portion (110, 118) is configured to make a determination of the state of the semiconductor light sources so that at least one of the semiconductor light sources that illuminates the portion of the irradiated region where the person exists is caused to be a state of emitting light at a luminance that is higher than a luminance of another semiconductor light source than the at least one of the semiconductor light sources that illuminates the portion of the irradiated region where the person exists.

4. A headlamp control system **characterized by** comprising:
the headlamp control apparatus (100) according to any one of claims 1 to 3; and
an electronic control unit (106) that is configured to control at least part of equipment of the host vehicle, the at least part of the equipment being other than the headlamp,
wherein the electronic control unit (106) is configured to generate and transmit the mode information (200).

5. A headlamp system **characterized by** comprising:
the headlamp control apparatus (100) according to any one of claims 1 to 4; and
the headlamp (10) of the host vehicle that includes the plurality of semiconductor light sources (34R/L-1 to 34R/L-20) and that is capable of altering brightness partly in the irradiated region according to the operation modes.

6. A headlamp system **characterized by** comprising:
the headlamp control system according to claim 5; and
the headlamp (10) of the host vehicle that includes the plurality of semiconductor light sources (34R/L-1 to 34R/L-20) and that is capable of altering brightness partly in the irradiated region according to the operation modes.

7. A headlamp control method **characterized by** using the headlamp control apparatus according to one of the claims 1 to 3 or a headlamp control system according to one of the claims 4 to 6 to perform the steps of :
identifying sectional resultant regions (52), in which brightness of irradiation needs to be altered, the sectional resultant regions (52) is divided regions of a region irradiated by a left headlamp and a right headlamp, each of which includes a plurality of semiconductor light sources;
identifying at least one of the semiconductor light sources that is involved in irradiation of the identified portion, with regard to each of the left headlamp and the right headlamp; and
altering luminance of the identified at least one of the semiconductor light sources of each of the left headlamp and the right headlamp
the method further comprising the step of determining whether another vehicle than a host vehicle that includes the left headlamp and the right headlamp exists in the irradiated region, wherein:
the identifying the portion, in which brightness of irradiation needs to be altered, includes identifying a portion of the irradiated region where the another vehicle exists if it is determined that the another vehicle exists in the irradiated region; and
when the luminance is altered, the luminance of the at least one of the semiconductor light sources that irradiates the portion of the irradiated region where the another vehicle exists is altered to a luminance that is lower than a luminance of another semiconductor light source than the at least one of the semiconductor light sources that irradiates the portion of the irradiated region where the another vehicle exists.

8. The headlamp control method according to claim 7, further comprising:
determining whether a person exists in the irradiated region, wherein:
the identifying the portion, in which brightness of irradiation needs to be altered, includes identifying a portion of the irradiated region where the person exists if it is determined that the person exists in the irradiated region; and
when the luminance is altered, the luminance of the at least one of the semiconductor light sources that irradiates the portion of the irradiated region where the person exists is altered to a luminance that is higher than a luminance of another semiconductor light source than the at least one of the semiconductor light sources that irradiates the portion of the irradiated region where the person exists.

## Patentansprüche

1. Scheinwerfersteuervorrichtung (100) zum Steuern eines Scheinwerfers (10) eines Stammfahrzeugs, das eine Vielzahl von Halbleiterlichtquellen (34R/L-1 bis 34R/L-20) aufweist, und wobei die Scheinwerfersteuervorrichtung (100) in der Lage ist, die Helligkeit in einem bestrahlten Bereich entsprechend dem Ein/Aus-Status einer Vielzahl von Betriebsarten teilweise zu ändern, wobei eine Betriebsart individuell einer der verschiedenen Funktionen des Scheinwerfers wie zum Beispiel der Blendschutzfunktion oder der Fußgängererkennungsfunktion entspricht, wobei die Scheinwerfersteuervorrichtung umfasst:
ein Modusinformationsempfangsteil (108, 116), das konfiguriert ist, um über eine vorgegebene Kommunikationsleitung die Modusinformationen (200) zu empfangen,
wobei die Modusinformationen (200) einen Ein/Aus-Status jeder der Betriebsarten anzeigen und wenigstens für eine der Betriebsarten sich abschnittsweise ergebende Bereiche (52) spezifizieren, in denen die Helligkeit geändert werden muss, wenn die wenigstens eine Betriebsart eingeschaltet ist, wobei die sich abschnittsweise ergebenden Bereiche (52) die geteilten Bereiche eines sich ergebenden bestrahlten Bereiches (50) sind, der eine Kombination aus dem bestrahlten Bereich des linken und rechten Scheinwerfers ist, wobei die Modusinformation (200) einen Bereicheskennungscode für jeden aus der Vielzahl von sich abschnittsweise ergebenden Bereichen (1 bis 23) aufweist;
ein Korrespondenzrelationsrückhalteteil (114, 122), das den Bereicheskennungscode und einen Lichtquellenkennungscode behält, die eine aus der Vielzahl von Halbleiterlichtquellen identifizieren, die den durch den Bereicheskennungscode identifizierten sich abschnittsweise ergebenden Bereich beleuchtet, wobei der Bereicheskennungscode und der Lichtquellenkennungscode einander zugeordnet sind;
ein Statusbestimmungsteil (110, 118), das konfiguriert ist, um auf das Korrespondenzrelationsrückhalteteil (114, 112) zu verweisen, um einen Status von jeder aus der Vielzahl von Halbleiterlichtquellen (34R/L-1 bis 34R/L-20) auf der Basis davon zu bestimmen, welche sich abschnittsweise ergebenden Bereiche (52) durch die von dem Modusinformationsempfangsteil (108, 116) empfangenen Modusinformationen (200) spezifiziert werden, wenn die empfangenen Modusinformationen (200) anzeigen, dass eine der wenigstens einen Betriebsart eingeschaltet ist,
wobei das Statusbestimmungsteil (110, 118) des Weiteren konfiguriert ist, um auf das Korrespondenzrelationsrückhalteteil (114, 122) zu verweisen, um wenigstens eine der Halbleiterlichtquellen zu bestimmen, die durch den Lichtquellenkennungscode entsprechend dem Bereicheskennungscode identifiziert wird, der in den Modusinformationen (200) als die Halbleiterlichtquelle enthalten ist, deren Leuchtkraft geändert werden muss; und
ein Lichtquellensteuerteil (112, 120), das konfiguriert ist, um die Vielzahl von Halbleiterlichtquellen (34R/L-1 bis 34R/L-20) zu steuern, um zu bewirken, dass jede aus der Vielzahl von Halbleiterlichtquellen (34R/L-1 bis 34R/L-20) in den durch das Statusbestimmungsteil (110, 118) bestimmten Status gebracht wird.

2. Scheinwerfersteuervorrichtung (100) nach Anspruch 1, wobei:
die Modusinformationen (200) Informationen (202) aufweisen, die, wenn bestimmt wird, dass sich ein anderes Fahrzeug als das die Scheinwerfersteuervorrichtung aufweisende Stammfahrzeug in dem bestrahlten Bereich befindet, einen Teil des bestrahlten Bereiches spezifiziert, in dem sich das andere Fahrzeug befindet; und
das Statusbestimmungsteil (110, 118) konfiguriert ist, um eine Bestimmung des Status der Halbleiterlichtquellen so vorzunehmen, dass der Status der wenigstens einen der Halbleiterlichtquellen, die den Teil des bestrahlten Bereiches beleuchtet, in dem sich das andere Fahrzeug befindet, auf einen Status zum Emittieren von Licht mit einer Leuchtkraft gebracht wird, die geringer ist als die Leuchtkraft einer anderen Halbleiterlichtquelle, als die wenigstens eine der Halbleiterlichtquellen, die den Teil des bestrahlten Bereiches beleuchtet, in dem sich das andere Fahrzeug befindet.

3. Scheinwerfersteuervorrichtung (100) nach Anspruch 1 oder 2, wobei:
die Modusinformationen (200) Informationen (204) aufweisen, die, wenn bestimmt wird, dass sich eine Person in dem bestrahlten Bereich befindet, einen Teil des bestrahlten Bereiches spezifizieren, in dem sich die Person befindet; und
das Statusbestimmungsteil (110, 118) konfiguriert ist, um eine Bestimmung des Status der Halbleiterlichtquellen so vorzunehmen, dass wenigstens eine der Halbleiterlichtquellen, die den Teil des bestrahlten Bereiches beleuchtet, in dem sich die Person befindet, auf einen Status zum Emittieren von Licht mit einer Leuchtkraft gebracht wird, die höher ist als die Leuchtkraft einer anderen Halbleiterlichtquelle, als die wenigstens eine der Halbleiterlichtquellen, die den Teil des bestrahlten Bereiches beleuchtet, in dem sich die Person befindet.

4. Scheinwerfersteuersystem, **dadurch gekennzeichnet, dass** es umfasst:
die Scheinwerfersteuervorrichtung (100) nach einem der Ansprüche 1 bis 3 und
eine elektronische Steuereinheit (106), die konfiguriert ist, um wenigstens einen Teil der Ausrüstung des Stammfahrzeugs zu steuern, wobei der wenigstens Teil der Ausrüstung anders ist als der Scheinwerfer, wobei die elektronische Steuereinheit (106) konfiguriert ist, um die Modusinformationen (200) zu erzeugen und zu senden.

5. Scheinwerfersystem, **dadurch gekennzeichnet, dass** es umfasst:
die Scheinwerfersteuervorrichtung (100) nach einem der Ansprüche 1 bis 4 und
den Scheinwerfer (10) des Stammfahrzeugs, der die Vielzahl von Halbleiterlichtquellen (34R/L-1 bis 34R/L-20) aufweist und der in der Lage ist, die Helligkeit im bestrahlten Bereich entsprechend den Betriebsarten teilweise zu ändern.

6. Scheinwerfersystem, **dadurch gekennzeichnet, dass** es umfasst:
das Scheinwerfersteuersystem nach Anspruch 5 und
den Scheinwerfer (10) des Stammfahrzeugs, der die Vielzahl von Halbleiterlichtquellen (34R/L-1 bis 34R/L-20) aufweist und der in der Lage ist, die Helligkeit im bestrahlten Bereich entsprechend den Betriebsarten teilweise zu ändern.

7. Scheinwerfersteuerverfahren, **gekennzeichnet durch** die Verwendung der Scheinwerfersteuervorrichtung nach einem der Ansprüche 1 bis 3 oder eines Scheinwerfersteuersystems nach einem der Ansprüche 4 bis 6, um die Schritte durchzuführen:
Identifizieren von sich abschnittsweise ergebenden Bereichen (52), in denen die Helligkeit der Bestrahlung geändert werden muss, wobei die sich abschnittsweise ergebenden Bereiche (52) geteilte Bereiche eines Bereiches sind, der von einem linken Scheinwerfer und einem rechten Scheinwerfer bestrahlt wird, von denen jeder eine Vielzahl von Halbleiterlichtquellen aufweist;
Identifizieren von wenigstens einer der Halbleiterlichtquellen, die an der Bestrahlung des identifizierten Teils beteiligt ist, im Hinblick auf jeweils den linken Scheinwerfer und den rechten Scheinwerfer; und
Ändern der Leuchtkraft der identifizierten wenigstens einen der Halbleiterlichtquellen von jeweils dem linken Scheinwerfer und dem rechten Scheinwerfer,
wobei das Verfahren des Weiteren den Schritt zum Bestimmen umfasst, ob sich ein anderes Fahrzeug als ein Stammfahrzeug, das den linken Scheinwerfer und den rechten Scheinwerfer aufweist, in dem bestrahlten Bereich befindet, wobei:
das Identifizieren des Teils, in dem die Helligkeit der Bestrahlung geändert werden muss, das Identifizieren eines Teils des bestrahlten Bereiches aufweist, in dem sich das andere Fahrzeug befindet, wenn bestimmt wird, dass sich das andere Fahrzeug in dem bestrahlten Bereich befindet; und
wenn die Leuchtkraft geändert wird, die Leuchtkraft der wenigstens einen der Halbleiterlichtquellen, die den Teil des bestrahlten Bereiches bestrahlt, in dem sich das andere Fahrzeug befindet, auf eine Leuchtkraft geändert wird, die geringer ist als die Leuchtkraft einer anderen Halbleiterlichtquelle, als die wenigstens eine der Halbleiterlichtquellen, die den Teil des bestrahlten Bereiches bestrahlt, in dem sich das andere Fahrzeug befindet.

8. Scheinwerfersteuerverfahren nach Anspruch 7, das des Weiteren umfasst:
Bestimmen, ob sich eine Person in dem bestrahlten Bereich befindet, wobei:
das Identifizieren des Teils, in dem die Helligkeit der Bestrahlung geändert werden muss, das Identifizieren eines Teils des bestrahlten Bereiches aufweist, in dem sich die Person befindet, wenn bestimmt wird, dass sich die Person in dem bestrahlten Bereich befindet; und
wenn die Leuchtkraft geändert, die Leuchtkraft der wenigstens einen der Halbleiterlichtquellen, die den Teil des bestrahlten Bereiches bestrahlt, in dem sich die Person befindet, auf eine Leuchtkraft geändert wird, die höher ist als eine Leuchtkraft einer anderen Halbleiterlichtquelle, als die wenigstens eine der Halbleiterlichtquellen, die den Teil des bestrahlten Bereiches bestrahlt, in dem sich die Person befindet.

## Revendications

1. Appareil de commande de phare (100) pour commander un phare (10) d'un véhicule hôte qui comprend une pluralité de sources de lumière à semi-conducteurs (34R/L-1 à 34R/L-20), et l'appareil de commande de phare (100) étant capable de modifier partiellement la luminosité dans une région éclairée conformément à un état actif/inactif d'une pluralité de modes de fonctionnement, dans lequel un mode de fonctionnement correspond individuellement à l'une des diverses fonctions du phare, comme par exemple la fonction anti-éblouissement ou la fonction de repérage de piéton,
l'appareil de commande de phare comprenant :
une partie de réception d'informations de mode (108, 116) configurée pour recevoir, par l'intermédiaire d'une ligne de communication prédéterminée, les informations de mode (200),
dans lequel les informations de mode (200) indiquent un état actif/inactif de chacun des modes de fonctionnement et spécifient, au moins pour l'un desdits mode de fonctionnement, les régions sectionnelles résultantes (52), dans lesquelles la luminosité doit être modifiée si ledit au moins un mode de fonctionnement est actif, dans lequel les régions sectionnelles résultantes (52) sont les régions divisées d'une région éclairée résultante (50) qui est une combinaison de la région éclairée des phares gauche et droit, les informations de mode (200) comprennent un code d'identification de région pour chacune de la pluralité de régions sectionnelles résultantes (1 à 23) ;
une partie de maintien de relation de correspondance (114, 122) qui maintient le code d'identification de région et un code d'identification de source de lumière qui identifie l'une de la pluralité de sources de lumière à semi-conducteurs qui éclaire la région sectionnelle résultante identifiée par le code d'identification de région, avec le code d'identification de région et l'identifiant de source de lumière associé l'un à l'autre ;
une partie de détermination d'état (110, 118) configurée pour se référer à la partie de maintien de relation de correspondance (114, 112) pour déterminer un état de chacune de la pluralité de sources de lumière à semi-conducteurs (34R/L-1 à 34R/L-20) sur la base duquel les régions sectionnelles résultantes (52) sont spécifiées par les informations de mode (200) reçues par la partie de réception d'informations de mode (108, 116), si les informations de mode (200) reçues indiquent que l'un dudit au moins un mode de fonctionnement est actif,
dans lequel la partie de détermination d'état (110, 118) est en outre configurée pour se référer à la partie de maintien de relation de correspondance (114, 122) pour déterminer au moins l'une des sources de lumière à semi-conducteurs qui est identifiée par le code d'identification de source de lumière correspondant au code d'identification de région inclus dans les informations de mode (200), en tant que source de lumière à semi-conducteurs dont la luminance doit être modifiée ; et
une partie de commande de source de lumière (112, 120) configurée pour commander la pluralité de sources de lumière à semi-conducteurs (34R/L-1 à 34R/L-20) de manière à amener chacune de la pluralité de sources de lumière à semi-conducteurs (34R/L-1 à 34R/L-20) dans l'état déterminé par la partie de détermination d'état (110, 118).

2. Appareil de commande de phare (100) selon la revendication 1, dans lequel :
les informations de mode (200) comprennent des informations (202) qui, lorsqu'il est déterminé qu'un véhicule autre que le véhicule hôte qui comprend l'appareil de commande de phare existe dans la région éclairée, spécifient une partie de la région éclairée où ledit autre véhicule existe ; et
la partie de détermination d'état (110, 118) est configurée pour effectuer une détermination de l'état des sources de lumière à semi-conducteurs de sorte que l'état d'au moins l'une des sources de lumière à semi-conducteurs qui éclaire la partie de la région éclairée où ledit autre véhicule existe soit amené à être un état d'émission d'une lumière à une luminance qui est inférieure à une luminance d'une source de lumière à semi-conducteurs autre que ladite au moins une des sources de lumière à semi-conducteurs qui éclaire la partie de la région éclairée où ledit autre véhicule existe.

3. Appareil de commande de phare (100) selon la revendication 1 ou 3, dans lequel :
les informations de mode (200) comprennent des informations (204) qui, lorsqu'il est déterminé qu'une personne existe dans la région éclairée, spécifient une partie de la région éclairée où la personne existe ; et
la partie de détermination d'état (110, 118) est configurée pour effectuer une détermination de l'état des sources de lumière à semi-conducteurs de sorte que l'état d'au moins l'une des sources de lumière à semi-conducteurs qui éclaire la partie de la région éclairée où la personne existe soit amené à être un état d'émission d'une lumière à une luminance qui est supérieure à une luminance d'une source de lumière à semi-conducteurs autre que ladite au moins une des sources de lumière à semi-conducteurs qui éclaire la partie de la région éclairée où la personne existe.

4. Système de commande de phare, **caractérisé en ce qu'**il comprend :
l'appareil de commande de phare (100) selon l'une quelconque des revendications 1 à 3 ; et
une unité de commande électronique (106) qui est configurée pour commander au moins une partie de l'équipement du véhicule hôte, ladite au moins une partie de l'équipement étant autre que le phare, dans lequel l'unité de commande électronique (106) est configurée pour générer et transmettre les informations de mode (200).

5. Système de phare, **caractérisé en ce qu'**il comprend :
l'appareil de commande de phare (100) selon l'une quelconque des revendications 1 à 4 ; et
le phare (10) du véhicule hôte qui comprend la pluralité de sources de lumière à semi-conducteurs (34R/L-1 à 34R/L-20) et qui est capable de modifier partiellement la luminosité dans la région éclairée conformément aux modes de fonctionnement.

6. Système de phare, **caractérisé en ce qu'**il comprend :
le système de commande de phare selon la revendication 5 ; et
le phare (10) du véhicule hôte qui comprend la pluralité de sources de lumière à semi-conducteurs (34R/L-1 à 34R/L-20) et qui est capable de modifier partiellement la luminosité dans la région éclairée conformément aux modes de fonctionnement.

7. Procédé de commande de phare, **caractérisé par** l'utilisation de l'appareil de commande de phare selon l'une des revendications 1 à 3 ou d'un système de commande de phare selon l'une des revendications 4 à 6 pour effectuer les étapes :
d'identification des régions sectionnelles résultantes (52), dans lesquelles la luminosité de l'éclairage doit être modifiée, les régions sectionnelles résultantes (52) étant les régions divisées d'une région éclairée par un phare gauche et un phare droit, chacune d'elles comprenant une pluralité de sources de lumière à semi-conducteurs ;
d'identification d'au moins l'une des sources de lumière à semi-conducteurs qui est impliquée dans l'éclairage de la partie identifiée, en relation avec chacun du phare gauche et du phare droit ; et
de modification de la luminance de ladite au moins une des sources de lumière à semi-conducteurs identifiée de chacun du phare gauche et du phare droit,
le procédé comprenant en outre l'étape de détermination si un véhicule autre que le véhicule hôte qui comprend le phare gauche et le phare droit existe dans la région éclairée, dans lequel :
l'identification de la partie, dans laquelle la luminosité de l'éclairage doit être modifiée, comprend l'identification d'une partie de la région éclairée où ledit autre véhicule existe s'il est déterminé que ledit autre véhicule existe dans la région éclairée ; et
lorsque la luminance est modifiée, la luminance de ladite au moins une des sources de lumière à semi-conducteurs qui éclaire la partie de la région éclairée où ledit autre véhicule existe est modifiée en une luminance qui est inférieure à une luminance d'une source de lumière à semi-conducteurs autre que ladite au moins une des sources de lumière à semi-conducteurs qui éclaire la partie de la région éclairée où ledit autre véhicule existe.

8. Procédé de commande de phare selon la revendication 7, comprenant en outre :
la détermination si une personne existe dans la région éclairée, dans lequel :
l'identification de la partie, dans laquelle la luminosité de l'éclairage doit être modifiée, comprend l'identification d'une partie de la région éclairée où la personne existe s'il est déterminé que la personne existe dans la région éclairée ; et
lorsque la luminance est modifiée, la luminance de ladite au moins une des sources de lumière à semi-conducteurs qui éclaire la partie de la région éclairée où la personne existe est modifiée en une luminance qui est supérieure à une luminance d'une source de lumière à semi-conducteurs autre que ladite au moins une des sources de lumière à semi-conducteurs qui éclaire la partie de la région éclairée où la personne existe.
